# EUROPEAN PATENT APPLICATION

(11) **EP 0 727 334 A1**
(43) Date of publication of application: **21.08.1996**
(21) Application number: 96420056.2
(22) Date of filing: 16.02.1996
(51) Int. Cl.: B60R 9/045, B60R 9/12

(54) **Attachment device for securing vehicle utility racks to rooftop elongated bars**

(30) Priority: 17.02.1995 CA 2142782
(71) Applicant: BELL SPORTS CANADA INC., Granby, Quebec J2G 8E2 (CA)
(72) Inventor: Moliner, Michael, Kingsbury, Quebec J0B 1X0 (CA)
(74) Representative: Maureau, Philippe

(57) **Abstract**

An attachment device for securing a utility rack (R) or the like to an elongated bar (B) provided typically on the rooftop of a vehicle comprises a flexible elongated strap (50) and a tightening mechanism (42,44) for the flexible strap. The tightening mechanism (42,44) is encased in a housing (24a,24b) of the utility rack (R) and the flexible strap (50) is adapted to be disposed around the elongated bar (B) and to form a closed loop therearound. The tightening mechanism (42,44) is operable to reduce or increase the dimensions of the loop, whereby a user of the utility rack (R) can firmly secure the utility rack to the elongated bar (B) by operating the tightening mechanism (42,44) in such a way that the elongated bar (B) becomes solidly secured within the loop formed by the flexible strap (50). The tightening mechanism includes a screw (42) mounted in the housing (24a,24b) and a pulling plate (44) threadably mounted to the screw (42) and adapted upon a rotation of the screw (42) to displace translationally along the screw (42). The strap (50) includes an opening (52) with the screw (42) extending therethrough such that a displacement of the plate (44) upon a rotation of the screw (42) causes the dimensions of the loop outside of the housing (24a,24b) to be selectively reduced or increased for gradually and respectively tightening or loosening the utility rack (R) with respect to the elongated member (B).

## Description

### BACKGROUND OF THE INVENTION

### 1. Field of the Invention

The present invention relates to utility or carrier racks for use on vehicles and, more particularly, to an attachment device for securing such utility racks to elongated bars mounted to vehicle rooftops and which typically extend transversally thereon.

### 2. Description of the Prior Art

United States Patent No. 5,067,644 issued on November 26, 1991 to Coleman discloses an elongated tubular foam rubber member 12 adapted to be wrapped around an elongated bar 17 of a roof rack for protecting objects, such as the object 14, which are placed on the rack. At each end of the elongated member 12, there is a strap 26 adapted to fasten the elongated member 12 to the elongated bar 17 and further adapted to fasten one or more objects to the rack, such as the object 14.

West German Patent Publication No. DE-40 07 199-A published on September 9, 1991 in the name of Pirker teaches a strap system which acts as an anti-theft device to protect items carried by the roof rack by way of a steel band or rope 19 which is secured to the items carried by the rack and which is attached by a tensioning element 11 to a locking unit 4 provided on the inside of the vehicle.

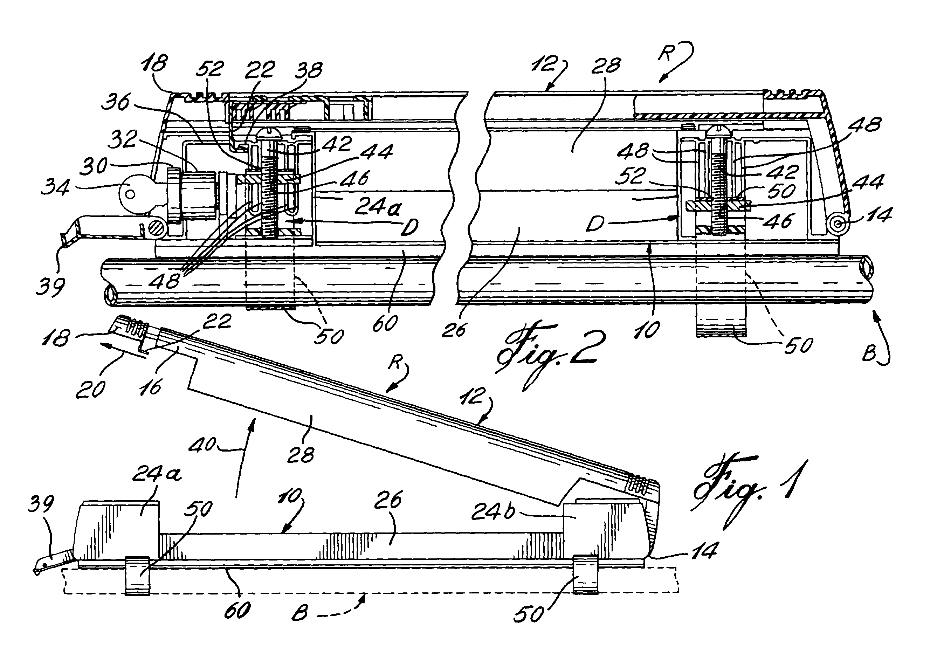

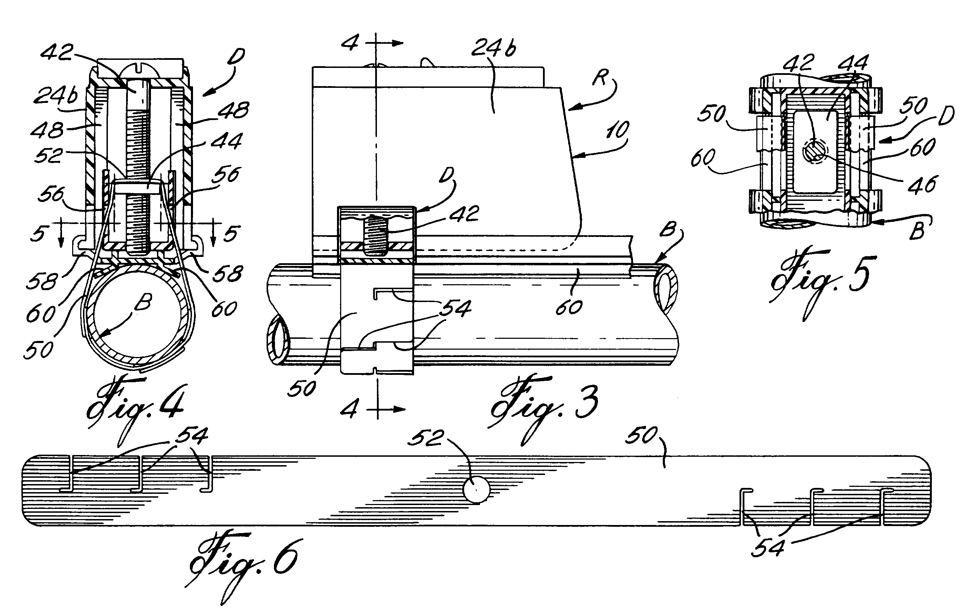

PCT Publication No. WO 90/10557 published on September 20, 1990 to Industri AB Thule discloses a load carrier provided with a strut 1 fixed over the vehicle roof and with a ski holder 2-5 removably secured to the strut 1 by way of a retainer stirrup 12 which, in a closed position, encloses the strut 1 to secure the ski holder 2-5 thereon, as seen in Figure 1. In Figure 2, there is shown in full lines the pivotal side 15 of the retainer stirrup 12 in an open position thereof which allows the ski holder 2-5 to be installed on or removed from the strut 1. The side 15 is also shown in phantom lines in Figure 2 in the closed position thereof. The side 15 is pivotally mounted to the retainer stirrup 12 by way of hinge 16 with the retainer stirrup 12 being made of a rigid material.

United States Patent No. 3,848,785 issued on November 19, 1978 to Bott discloses a pair of transversally spaced supports 18 which can be positioned on the cross bars 20 of a roof rack 22 mounted on a vehicle roof 24 with the supports 18 being paired with and held in place by associated clamps 26 positioned underneath the cross bars 20, as seen in Figure 3. Figures 6 and 7 illustrate a modified support 102 for the roof rack.

United States Patent No. 4,217,999 issued on August 19, 1980 to Forsman teaches a vertically extending rigid hook member 16 which is adapted to engage a transverse elongated strut 17 included in a roof carrier secured to the automobile roof 18. The hook member 16 allows a skicase 1-7 to be mounted to the strut 17. A wing nut 19 threaded on the upper end of the hook member 16 is used to safely secure the skicase to the strut 17 of the roof rack.

United States Patent No. 5,275,320 issued on January 4, 1994 to Duemmler, United States Patent No. 4,867,362 issued on September 19, 1989 to Finnegan et al. and West German Patent Publication No. DE-35 21 275-A published on December 12, 1986 in the name Tittel all disclose luggage or ski carriers for vehicles that have rigid clamping system so that they can be secured to specific elongated rooftop or roof rack bars.

### SUMMARY OF THE INVENTION

It is therefore an aim of the present invention to provide a novel attachment device adapted to allow vehicle utility racks to be removably secured to rooftop elongated bars provided on vehicles.

It is also an aim of the present invention to provide an attachment device adapted for allowing vehicle utility racks to be removably secured to rooftop elongated bars provided on vehicles and having substantially any cross-sectional shape.

It is a further aim of the present invention to provide an attachment device adapted to removably secure vehicle security racks to rooftop elongated bars of various transverse dimensions.

It is a still further aim of the present invention to provide an attachment device adapted to removably secure vehicle utility racks to rooftop elongated bars in a substantially tamper-proof manner.

Therefore, in accordance with the present invention, there is provided an attachment device for securing a utility rack or the like to an elongated member provided on a vehicle or the like, comprising a flexible elongated means and a tightening means for said flexible elongated means, said tightening means being adapted to be disposed in the utility rack, said flexible elongated means being adapted to be disposed around the elongated member and to form a loop therearound, said tightening means being operable to reduce or increase dimensions of the loop, whereby a user of the utility rack can firmly secure the utility rack to the elongated member by operating said tightening means so that the elongated member is solidly retained within the loop formed by said flexible elongated means.

### BRIEF DESCRIPTION OF THE DRAWINGS

Having thus generally described the nature of the invention, reference will now be made to the accompanying drawings, showing by way of illustration a preferred embodiment thereof, and in which:
Fig. 1 is a front elevational view of a vehicle utility rack embodying an attachment device in accordance with the present invention, a rooftop elongated bar being shown in phantom lines with the utility rack being attached thereto by way of the attachment device of the present invention;
Fig. 2 is a front elevational vertical cross-sectional view of the utility rack and attachment device of Figure 1 but wherein the utility rack is shown in a closed position thereof and with the elongated bar being shown in full lines;
Fig. 3 is a fragmented front elevational view taken partly in cross-section of a righthand part of Figure 1;
Fig. 4 is a side elevational vertical cross-sectional view taken along line 4-4 of Figure 3 which shows in details the attachment device of the present invention;
Fig. 5 is a fragmented horizontal cross-sectional view taken along line 5-5 of Figure 4;

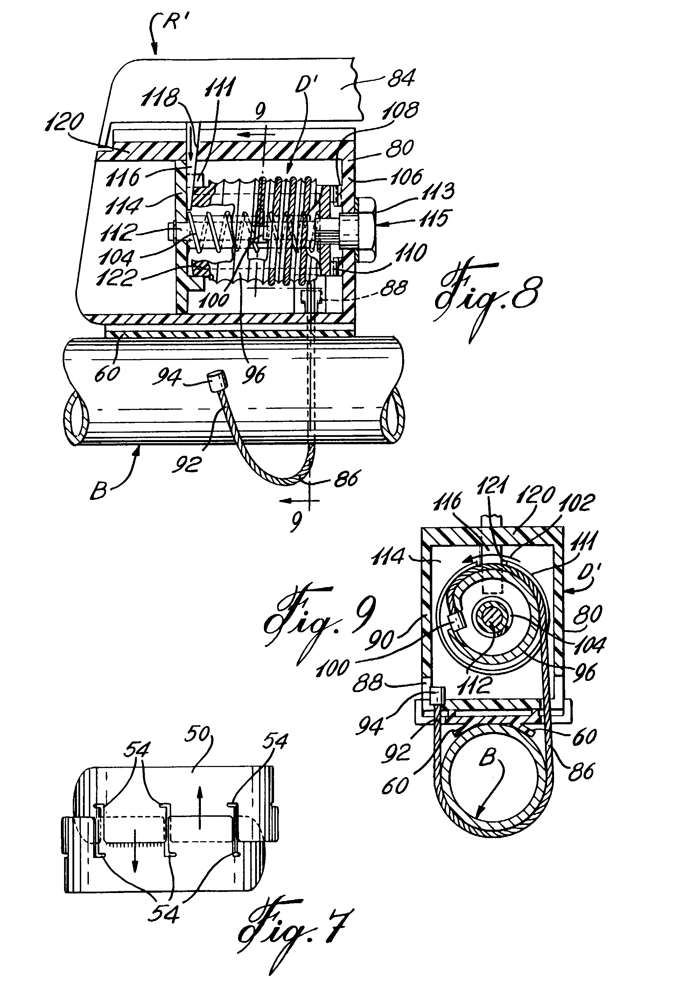

Fig. 6 is a top plan view of a flexible elongated strap of the attachment device of the present invention;
Fig. 7 is a bottom plan view of the elongated strap of Figures 1 and 6 shown as the ends thereof are being engaged together in a rolled up fashion to form a closed loop;
Fig. 8 is a vertical cross-sectional view taken as a front elevation which is similar to the lefthand part of Figure 2 but showing a variant attachment device also in accordance with the present invention; and
Fig. 9 is a side elevational vertical cross-sectional view taken along line 9-9 of Figure 8 and showing details of the variant attachment device of Figure 8.

### DESCRIPTION OF THE PREFERRED EMBODIMENTS

There exists different types of elongated bars or struts having various cross-sections, such as oval, rectangular, round, square, etc., which are found on vehicles (including 4 X 4 and recreational vehicles) or even on aftermarket utility racks mounted to vehicles. The elongated bars are used for mounting various objects, for instance, to the roof of the vehicle and these bars normally extend transversally or longitudinally in a substantially horizontal relationship on the roof of the vehicle. The intent of the present invention is to provide an attachment device which can be used to secure a utility rack to such bars with the attachment device being adapted to be functional for various shapes of bars. For doing so, a flexible member which forms a loop is proposed and the flexible member is adapted to surround the elongated bar while the loop enters the housing of the utility rack into which is mounted the remainder of the attachment device, whereat the flexible member can be tightened or released with a tightening mechanism provided in the housing of the utility rack and which is tamper-proof as it can only be selectively accessed by the user of the utility rack. Generally, the flexible member must be difficult to cut, must closely embrace the elongated bar so as to adequately secure the utility rack to the bar and also to render the cutting of the flexible member by a thief very difficult.

With reference to the enclosed drawings, an attachment device D in accordance with the present invention is shown in position within a utility rack R for mounting the latter to an elongated bar B.

As best seen in Figure 1, the utility rack R includes a lower base 10 and an upper arm 12 pivotally mounted generally at pivot area 14. At an outer end 16 of the upper arm 12, there is provided a retaining slide 18 adapted to be displaced along arrow 20 from its retracted position shown in Figure 2 towards its expanded position shown in Figure 1. The movement of the retaining slide 18 is only permitted when the utility rack R is unlocked and this will be described in details hereinafter. A hook 22 which depends from the retaining slide 18 extends downwards therefrom and then horizontally inwardly of the utility rack R.

The lower base 10 of the utility rack R includes at both longitudinal ends thereof outer and inner housings 24a and 24b, respectively. An elongated connecting member 26 extends longitudinally and horizontally between the inner and outer housings 24b and 24a. The upper arm 12 is connected at the pivot area 14 to the inner housing 24b. In the present utility rack R, skis can be disposed transversally on the connecting member 26 of the lower base 10 so as to become sandwiched in a conventional manner between an enlarged central retaining elongated member 28 of the upper arm 12 and the connecting member 26 of the lower base 10.

The lower base 10 is connected to the elongated bar B by way of a pair of attachment devices D in accordance with the present invention and provided at one end the other of the inner and outer housings 24a and 24b. In typical applications, a second utility rack R will be secured by way of a further pair of attachment devices D to another elongated bar B provided in a spaced apart and parallel relationship with respect to the bar B illustrated in the present drawings. A pair of further utility racks could also symmetrically disposed on the two elongated bars in alignment transversally on the rooftop with the previous two utility racks.

Now referring to Figure 2, the outer housing 24a includes a locking mechanism 30 which includes a rotatable barrel 32 operable by way of a key 34 in a conventional manner with a crook member 36 depending from the barrel 32 and adapted, in a locked position of the utility rack R, to be disposed in contact and outwardly of the hook 22, as seen in Figure 2, with the hook 22 having its horizontal portion engaged underneath a horizontally extending flange 38 provided in the outer housing 24a. With a keyhole cover 39 in an open position (see Figure 2), the key 34 can be inserted in the keyhole and rotated to unlock the locking mechanism 30 and thus to allow the upper arm 12 to be pivoted upwards as per arrow 40 and away from the lower base 10. While unlocking the locking mechanism 30, the barrel 32 is rotated thereby causing the crook member 36 to disengage from the hook 22, whereby the retaining slide 18 can be displaced in translation outwardly of the utility rack R (see arrow 20 of Figure 1) so as to disengage the hook 22 from the flange 38 and thus allow the upper arm 12 to be freely pivoted with respect to the lower base 10.

We will now describe in details the attachment device D provided in each of the inner and outer housings 24b and 24a. The attachment device D includes a screw 42 vertically retained within the housing 24a,24b and a horizontally extending plate 44 defining a threaded central opening 46 and being threadably engaged to the screw 42. The plate 44 is rectangular and is prevented from rotating in a horizontal plane by various partition walls defined in the housing 24a,24b, such as the partition walls 48 shown in Figure 5. Therefore, a rotation of the screw 42 will cause the plate 44 to displace upwards or downwards along the partition walls 48 as it is prevented from rotating with the screw 42 thereby.

An elongated flexible strap 50 which is typically made of a metallic material and which is illustrated in its unfolded position in Figure 6 is adapted to form a loop, as generally shown in Figure 7, which will extend around the elongated bar B and enter the housing 24a,24b with the arrangement of the screw 42 and the plate 44 acting as a tightening mechanism for the flexible strap 50, as described in more details hereinbelow.

The flexible strap 50 defines a central opening 52 and at opposite ends thereof a series of three L-shaped slits 54 with the slits 54 of one end of the strap 50 extending transversally and longitudinally opposite the slits of the other end of the strap 50. During assembly of the attachment device D, the screw 42 in inserted through the opening 52 of the flexible strap 50, above the plate 44, and the flexible strap 50 is then extended downwardly on each side of the plate 44 and through openings 56 defined in the partition walls 48 of the housing 24a,24b, as best seen in Figure 4. The flexible strap 50 then emerges from the housing 24a,24b through a pair of openings 58 defined therein. The utility rack R is typically sold in this position, whereby the user must then position the flexible strap 50 around the elongated bar B and the ends of the flexible strap 50 are thereafter engaged one to the other, as seen in Figure 7, with at least one slit 54 of one end of the strap 50 engaging a slit 54 of the other end of the strap 50 (the slits 54 can also be engaged two-by-two). If the ends of the strap 50 are then pulled away from each other, the bottoms or ends of the short longitudinal sections of the engaged slits 54 abut each other, whereby the flexible strap 50 forms a loop and the ends thereof cannot be disengaged simply by transversally pulling them one away from the other as they will have to first be longitudinally brought towards one anotehr so that the transversal sections of the slits 54 coincide, somewhat as in Figure 7.

Once the flexible strap 50 has been handled to form a loop and the ends thereof have been securely engaged one to the other, the flexible member 50 might look like that illustrated on the righthand side of Figure 2 for the inner housing 24b. In such a position, the flexible strap 50 loosely surrounds the elongated bar B. With the locking mechanism 30 in its unlocked position and with the upper arm 12 expanded with respect to the lower base 10, as in Figure 1, the user can access the head of the screw 42 and rotate it with a screwdriver or a hexagonal-head key so as to cause the plate 44 to displace upwardly along the threaded shaft of the screw 42 thereby pulling on both sides the flexible strap 50. There is a double pulling action in that for each length displaced by the plate 44 along the screw 42, there is twice as much length having been pulled at the level of the flexible strap 50. The screw 42 is rotated until the flexible strap 50 tightly surrounds the elongated bar B, as seen in Figure 4 and further as seen for the outer housing 24a of Figure 2, with the housing 24a,24b resting on the elongated bar B with some stability by way of flared support members 60 provided under the housing 24a,24b. Once both attachment devices D of the utility rack R have been operated so that the flexible straps 50 firmly anchor the utility rack R to the elongated bar B, the upper arm 12 can be pivoted downwards and the locking mechanism 30 can be displaced towards its locked position of Figure 2 such that the head of the screw 42 cannot be accessed from the outside by a thief or the like with a view of first loosening the flexible strap 50 around the elongated bar B and then disengaging the ends of the flexible strap 50 one from the other so as to completely release the utility rack R from the elongated bar B.

The flexibility of the strap 50 allows it to conform itself to various peripheral cross-sectional shapes of elongated bars B in such a way that no tool can be inserted between the strap 50 and the bar B with a view of cutting the flexible strap 50 and releasing the utility rack R from the elongated bar B. The provision of a series of L shaped slits 54 at each end of the flexible strap 50 allows for a same attachment device D to be used with elongated bars of various transverse dimensions and peripheries.

In Figures 8 and 9, there is proposed a variant attachment device D' which operates as follows. Most of the attachment device D' is enclosed in a housing 80 of a lower base 82 of a utility rack R' embodying the variant attachment device D'. The utility rack R' also includes an upper arm 84 pivotally mounted to the lower base 82 in a way similar to the pivotal connection of the upper arm 12 to the lower base 10 in the utility rack of Figures 1 and 2. The locking mechanism 30 of Figures 1 and 2 is normally present in the embodiment of Figures 8 and 9 but has not herein been illustrated for clarity purposes. The attachment device D' comprises a stainless steel cable 86 instead of the flexible strap 50 of the attachment device D of Figures 1 to 7. The housing 80 defines a T-shaped opening 88 on the low end of one of its sides 90. One end 92 of the cable 86 includes a stopper 94 adapted to be inserted in the housing through the opening 88 thereof.

The attachment device D' which is mostly all encased in the housing 80 comprises a rotatable drum 96 which defines on its periphery a continuous spiral-shaped shallow groove 98. Another end 100 of the cable 86 is secured to the drum 96, as best seen in Figure 9. Upon rotation of the drum 96 along either one of the directions indicated by arrow 102 in Figure 9, the cable 86 will either wind around or unwind from the drum 96 with the cable 86 resting in the continuous groove 98 of the drum 96, as well seen in Figure 8.

The drum 96 is slightly longitudinally displaceable in the housing 80 while being spring loaded by way of spring 104 towards an inner wall 106 of the housing 80. The inside of the inner wall 106 defines ratchet teeth 108 along a ring-shaped configuration which are engaged with cooperating ratchet teeth 110 provided at the inner end of the drum 96, as seen in Figure 8. The drum 96 which is journalled at its end opposite the ratchet teeth 110 in a ring-shaped bushing-like member 111 is rotatably operable from outside of the housing 80 by way of a bolt 112 which has an outside hexagonal head 113 and which extends through the drum 96 and is journalled at its free end in an outer wall 114 of the housing 80.

To secure the utility rack R' to the elongated bar B by way of the variant attachment device D', the rack R' is loosely positioned on the bar B so as to rest on its support members 60 and the steel cable 86 is brought around the bar B and then the stopper 94 of the cable 86 is inserted through the opening 88 and retained adjacent thereto by the housing 80 as shown in Figure 9. A subsequent clockwise rotation of the bolt 112 causes the drum 96 to rotate thereby causing the cable 86 to gradually wind around the drum 96 so as to eventually tightly surround the elongated bar B (see Figure 9). The cooperating ratchet teeth 108 and 110 provided respectively on the inner wall 106 of the housing 80 and on the rear end of drum 96 allow for the drum 96 to be rotated using the bolt 112 while preventing a derotation of the drum 96 when the pressure in the cable 86 surrounding the elongated bar B becomes noticeable until the cable 86 tightly surrounds the elongated bar B, as seen in Figure 9.

The arrangement of the drum 96 with the bolt 112 is slightly longitudinally slidable with respect to the housing 80, whereby to loosen the cable 86 the cooperating ratchet teeth 108 and 110 must be disengaged and this is accomplished by pushing the bolt 112 along arrow 115 and thus against the force of the spring 104 which causes the ratchet teeth 108 and 110 to disengage thereby allowing the drum to be rotated counterclockwise so as to loosen the cable 86, at which point the stopper 94 can be removed from the housing 80 thereby allowing the utility rack R' to be completely removed from the elongated bar B.

In order to prevent the utility R' from being stolen by removing it from the elongated bar B, the upper arm 84 comprises a locking finger 116 which extends downwardly therefrom and which is adapted, in a closed position of the upper arm 84 with respect to the lower base 82, to extend through an opening 118 defined in an upper side 120 of the housing 80 and through a notch 121 defined at the upper end of the bushing 111 (see Figure 9), and to then extend between an outer end of the drum 96 and the outer wall 114, as shown in Figure 8, in such a way as to eliminate a gap 122 defined between the drum 96 and the outer wall 114 thereby preventing any outer longitudinal displacement of the drum 96 and thus preventing the ratchet teeth 108 and 110 from being disengaged. Therefore, only the user who can unlock the upper arm 84 from the lower base 82 can successfully push on the bolt 112 with a view of disengaging the ratchet teeth 108 and 110 and removing the utility rack R' from the elongated bar B.

In summary, for the variant attachment device D' of Figures 8 and 9, the cable 86 is handled to form a loop outside of the housing 80 with the loop surrounding the elongated bar B. The cable 86 is wound around the drum 96 which extends exteriorly of the housing 80 as an hexagonal head or bolt 112 with the drum 96 being spring-loaded in the housing 80 by the spring 104. The cooperating ratchet teeth 108 and 110 provided on the inside of the housing 80 and on an inner end of the drum 96 retains the drum 96 in position under the influence of the spring 104 as the spring 104 urges the drum 96 towards the bolt 112 and thus the ratchet teeth 110 thereof into engagement with the ratchet teeth 108 of the inner wall 106 of the housing 80. In this position, a rotation of the bolt 112 will cause the drum 96 to rotate and the cable 86 to wind therearound which results in the shortening of the size of the loop formed by the cable 86 and thus ultimately in the utility rack R' becoming secured to the elongated bar B which extends through the loop. Once the upper pivoted arm 84 is lowered, that is snapped into position with the lower base 82, the locking finger 116 becomes located beteen the cylinder 96 and the outer wall 114, whereby the drum 96 cannot be pushed from the outside against the spring force of the spring 104 with a view of disengaging the cooperating ratchet teeth 108 and 110. On the other hand, the user can release the cable 86 from the elongated bar B by unlocking the upper arm 84 from the lower base 82 and then pivoting the upper arm 84 upwards so that the locking finger 116 is removed from behind the drum 96, whereby the user can then push on the hexagonal head of the bolt 112 against the spring force of the spring 104 so as to disengage the cooperating ratchet teeth 108 and 110 from each other and then allowing the cable 86 to be unwound from the drum 96 and thus loosened.

From the foregoing, it is readily understood that the present invention provides attachment devices for securing utility racks to various elongated bars provided on the roofs of vehicles with the attachment devices each comprising a flexible member surrounding the bar and a tightening mechanism located in the utility rack and adapted to reduce the size of the loop formed by the flexible member until the flexible member tightly surrounds the elongated bar at which point the utility rack is firmly secured to the elongated bar. The flexibility of the flexible member, as embodied for instance in the flexible strap 50 of Figures 1 to 7 and in the flexible cable 86 of Figures 8 and 9, allows for the attachment devices to conform themselves to elongated bars of various cross-sectional shapes and/or transverse or peripheral dimensions.

## Claims

1. An attachment device for securing a utility rack or the like to an elongated member provided on a vehicle or the like, comprising a flexible elongated means and a tightening means for said flexible elongated means, said tightening means being adapted to be disposed in the utility rack, said flexible elongated means being adapted to be disposed around the elongated member and to form a loop therearound, said tightening means being operable to reduce or increase dimensions of the loop, whereby a user of the utility rack can firmly secure the utility rack to the elongated member by operating said tightening means so that the elongated member is solidly retained within the loop formed by said flexible elongated means.

2. An attachment device as defined in Claim 1, wherein for each independent section of the utility rack there is provided at least a pair of said attachment devices.

3. An attachment device as defined in Claim 1, wherein said tightening means is enclosed in a hollow housing means of the utility rack.

4. An attachment device as defined in Claim 3, wherein said tightening means comprise a screw mounted in said housing means and a pulling member threadably mounted to said screw and adapted upon a rotation of said screw to displace translationally along said screw, said pulling member cooperating with said flexible elongated means in order that a displacement of said pulling member upon a rotation of said screw causes the dimensions of said loop of said flexible elongated means to be selectively reduced or increased for gradually and respectively tightening or loosening the utility rack with respect to the elongated member.

5. An attachment device as defined in Claim 4, wherein said screw extends substantially at right angles to an axis of the elongated member, said pulling member comprising a plate defining a threaded opening with said screw extending therethrough, said plate extending in a plane substantially perpendicular to said an axis of said screw, said flexible elongated means comprising a flexible band defining an aperture with said screw extending therethrough, said band having ends thereof extending outside of said housing means and being adapted to be secured together to form said loop with the elongated member extending within the loop outside of said housing means whereas said plate is positioned within said loop inside of said housing means, whereby a displacement of said plate by way of said screw will selectively reduce or increase a portion of the loop extending outside of said housing means for selectively respectively tightening or loosening the elongated member with respect to the utility rack.

6. An attachment device as defined in Claim 5, wherein said ends of said band each define a series a L-shaped slits each having a transversal section extending transversally from a respective longitudinal edge of said band inwardly to a longitudinal axis of said band and a longitudinal section extending longitudinally and outwardly from an inner end of said transversal section and coaxially to said longitudinal axis of said band, whereby at least one slit at each of said ends of said band can be engaged first transversally and inwardly at respective transversal sections thereof and then longitudinally outwardly at said longitudinal sections thereof until longitudinally outer ends of said longitudinal sections are substantially coincident, whereby once said flexible elongated means firmly secures the utility rack to the elongated member said ends of said band are substantially prevented form being disengaged.

7. An attachment device as defined in Claim 4, wherein said screw can only be selectively accessed by the user.

8. An attachment device as defined in Claim 7, wherein the utility rack is adapted to allow access to a head of said screw when in an open position thereof, the utility rack having a locking mechanism for preventing a displacement thereof toward said open position by others than the user.

9. An attachment device as defined in Claim 5, wherein said plate is of substantially rectangular shape, said housing means comprising walls extending parallel to said screw and close to said plate for substantially preventing a rotation of said plate when said screw is rotated by the user thereby forcing said plate to displace translationally along said screw.

10. An attachment device as defined in Claim 4, wherein said tightening means comprise a drum means mounted in said housing means substantially parallel to longitudinal axes of the utility rack and of the elongated member, said flexible elongated means comprising a cable means secured at one end thereof to said drum and extending outside of said housing means, whereby said cable means can be disposed around the elongated member to form said loop, another end of said cable means being engageable to said housing means to complete the loop, said drum being adapted to be rotated to cause said cable means to wing around or unwind from said drum so that the dimensions of said loop of said cable means are selectively reduced or increased for gradually and respectively tightening or loosening the utility rack with respect to the elongated member.

11. An attachment device as defined in Claim 4, wherein a first end of said drum and an inner wall of said housing means located opposite thereto define cooperating ratchet teeth, said drum being spring-loaded toward said inner wall, said tightening means comprising outside of said housing means an actuator means adapted to rotate said drum.

12. An attachment device as defined in Claim 11, wherein said drum includes a central shaft extending through said inner wall with said actuator means being mounted to said shaft outside of said housing means.

13. An attachment device as defined in Claim 12, wherein said ratchet teeth are adapted to be disengaged upon a longitudinal displacement of said drum away from said inner wall thereby allowing said drum to rotate in a direction causing said cable means to unwind therefrom, said displacement resulting from pushing said actuator means toward said housing means.

14. An attachment device as defined in Claim 13, wherein a removable arresting means is provided outward of a second end of said drum opposite said first end thereof for allowing only the user to cause said displacement of said drum once said arresting means has been removed by opening the utility rack.

15. A utility rack comprising at least one attachment device adapted to secure the utility rack to an elongated member provided on a vehicle or the like, each said attachment device comprising a flexible elongated means and a tightening means for said flexible elongated means, said flexible elongated means extending at partly outside of said utility rack and being adapted to be disposed around the elongated member and to form a loop therearound, said tightening means being operable to reduce or increase dimensions of the loop, whereby a user of the utility rack can firmly secure the utility rack to the elongated member by operating said tightening means so that the elongated member is solidly retained within the loop formed by said flexible elongated means.
